(19) Europäisches Patentamt
European Patent Office
Office européen des brevets

(11) EP 2 163 858 A1

(12) EUROPEAN PATENT APPLICATION

(43) Date of publication:
17.03.2010 Bulletin 2010/11

(51) Int Cl.:
G01D 5/245 (2006.01)

(21) Application number: 08425606.4

(22) Date of filing: 16.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Magneti Marelli Powertrain S.p.A.
28011 Corbetta (IT)

(72) Inventors:
• Lupo, Savino
40127 Bologna (IT)

• Alessandri, Andrea
40124 Bologna (IT)
• Lattanzio, Stefano
10137 Torino (IT)
• Riguzzi, Marco
40010 Sala Bolognese (IT)

(74) Representative: Maccagnan, Matteo et al
Studio Torta S.r.l.
Via Viotti 9
10121 Torino (IT)

(54) **A control method for determining the angular position of a drive shaft of an internal combustion engine**

(57) A control method for determining the angular position of a drive shaft (4) of an internal combustion engine (1) provided with a phonic wheel (5), which is integral with the drive shaft (4), is provided with a plurality of equally spaced teeth (6), and has a singularity (S) consisting of at least one missing tooth (6) at a predetermined angular position; the control method comprises the steps of: determining the passage of each tooth (6) of the phonic wheel (5) facing a reader (7) arranged in a fixed position; calculating in sequence each tooth time (T), i.e. the interval of time which elapses between the passage of a tooth (6) and the passage of the next tooth (6); and determining the passage of the singularity (S) according to the tooth times (T).

FIG.1

EP 2 163 858 A1

**Description**

TECHNICAL FIELD

The present invention relates to a control method for determining the angular position of a drive shaft of an internal combustion engine.

BACKGROUND ART

An internal combustion engine comprises a number of cylinders and a corresponding number of pistons, each of which is slidingly accommodated inside a corresponding cylinder and transmits motion to a drive shaft rotationally mounted by means of a rod-crank coupling. In a modern internal combustion engine, the instantaneous angular position of the drive shaft must be known in real time with an adequate accuracy for controlling the fuel combustion inside the cylinders (i.e. for controlling the injection of fuel and for controlling, in controlled ignition engines, the ignition of the mixture).

Position sensors of the "phonic wheel" type are used to determine the instantaneous angular position of the drive shaft in the currently marketed internal combustion engines. A position sensor of the "phonic wheel" type comprises a toothed wheel (named "phonic wheel" indeed), which is provided with a plurality of equally spaced teeth and is integral with the drive shaft and a reader (e.g. of the inductive type having a varying reluctance or a Hall effect), which is arranged in a fixed position close to the phonic wheel and is adapted to read the passage of each tooth of the phonic wheel. By counting the number of teeth of the phonic wheel by means of the reader, the relative angular position of the drive shaft may be determined; the phonic wheel is provided with a predetermined angular position of a singularity (typically two missing teeth), which is known beforehand and recognized by the reader, for determining the absolute angular position of the drive shaft.

Specifically, the "tooth time", i.e. the interval of time which elapses between the passage of one tooth and the passage of the next tooth is continuously determined in order to determine the passage of the singularly; at a constant speed, the tooth time is triple at the singularity (in case of two missing teeth) with respect to the normal tooth time, and thus the passage of the singularity is determined when a triple tooth time with respect to normal time is determined, which allows to accurately know the absolute angular position of the drive shaft.

The above-described recognition method of the passage of the singularity works correctly in most internal combustion engines, because in most internal combustion engines the variations of angular speed of the drive shaft (i.e. the instantaneous angular accelerations) are relatively moderate and thus at the singularity, the tooth time always has a duration approximately triple to the normal tooth time. However, in a high-performance internal combustion engine having a high compression ratio and a very light flywheel (typically a high-performance internal combustion engine for motorcycles having high unitary capacities), the angular speed variations of the drive shaft (i.e. the instantaneous angular accelerations) may be very high and thus a sudden increase of the angular speed of the drive shaft during the passage of the singularity in front of the reader could noticeably reduce the tooth time of the singularity, thus determining a missed recognition of the passage of the singularity itself. Similarly, a sudden decrease of the angular speed of the drive shaft could considerably increase the tooth time beyond the singularity, thus determining a false recognition of the passage of the singularity.

DISCLOSURE OF INVENTION

It is the object of the present invention to provide a control method for determining the angular position of the drive shaft of an internal combustion engine, which control method is free from the above-described drawbacks, and specifically, is easy and cost-effective to be implemented.

According to the present invention, a control method for determining the angular position of a drive shaft of an internal combustion engine is provided as claimed in the appended claims.

BRIEF DESCRIPTION OF THE DRAWINGS

The present invention will now be described with reference to the accompanying drawings, which illustrate a non-limitative embodiment thereof, in which:

- figure 1 is a diagrammatic view of an internal combustion engine provided with a control unit which implements the control method for determining the angular position of a drive shaft object of the present invention; and
- figure 2 is a graph which illustrates the time evolution of the signal supplied by a phonic wheel of the internal combustion engine in figure 1.

PREFERRED EMBODIMENTS OF THE INVENTION

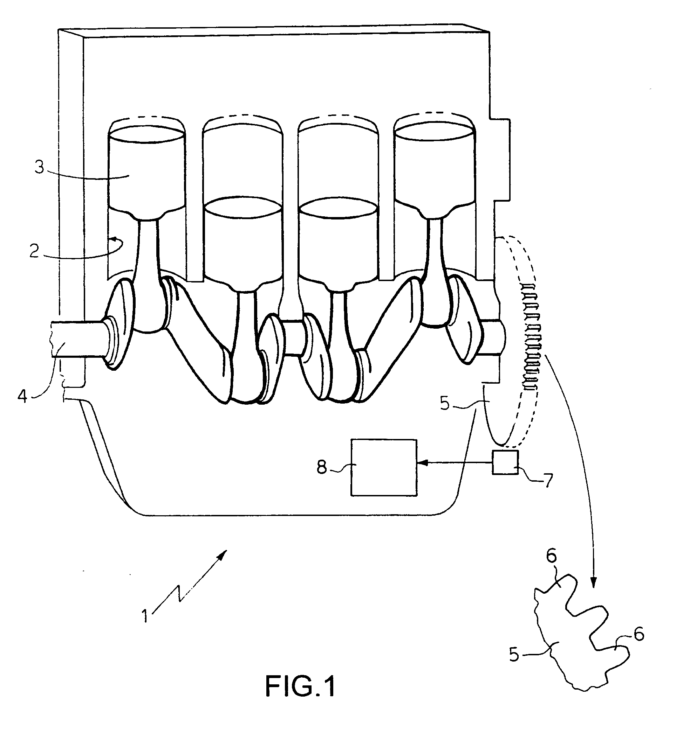

In figure 1, numeral 1 indicates as a whole a gasoline-fed, controlled ignition (i.e. operating according to the Otto cycle), internal combustion engine mounted aboard a road vehicle (not shown) which is provided with a drive line (not shown) for transmitting the drive torque generated by the internal combustion engine 1 to the ground. The internal combustion engine 1 comprises four cylinders 2, each of which is coupled to a corresponding spark plug (not shown) and accommodates a corresponding piston 3 mechanically connected by means of a connecting rod to a drive shaft 4 for transmitting the force generated by the combustion inside the cylinder 2 to the drive shaft 4 itself.

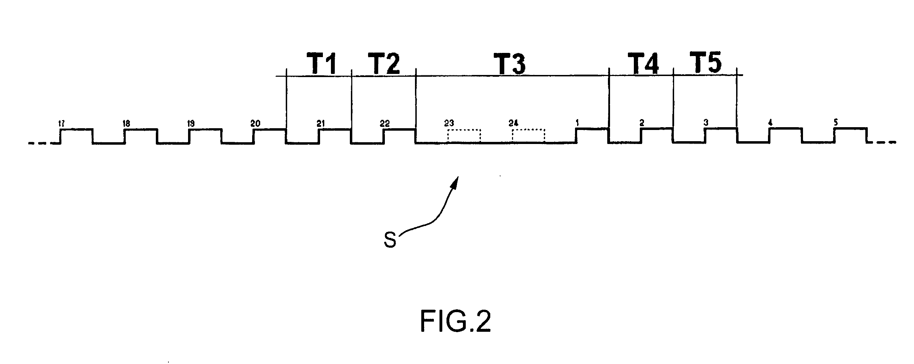

A phonic wheel 5 is keyed to the drive shaft 4, which phonic wheel is provided with a number N (e.g. 24 as in the example shown in figure 2) of teeth 6 and is coupled to a reader 7 (e.g. of the inductive type having a varying reluctance or a Hall effect), which is arranged in a fixed position in front of the phonic wheel 5 and is adapted to read the passage of each tooth 6 of the phonic wheel 5. The teeth 6 of the phonic wheel 5 are reciprocally and equally spaced and the phonic wheel 5 is provided with a singularity S in a predetermined angular position known beforehand (shown in figure 2), which allows to recognize the absolute angular position of the phonic wheel 5 (and thus of the drive shaft 4) and consists in a missing number M (e.g. two as in the example shown in figure 2) of teeth 6.

The internal combustion engine 1 further comprises an electronic control unit 8, which is connected to the reader 7 for receiving the information on the passage of teeth 6 of the phonic wheel from the reader itself. By analyzing the information on the passage of teeth 6 of the phonic wheel 5, the electronic control unit 8 determines the absolute angular position of the phonic wheel 5 (and thus of the drive shaft). Specifically, by counting the passage of teeth 6 of the phonic wheel 5 starting from the singularity S, the electronic control unit 8 is able to determine the absolute angularly position of the phonic wheel 5 instant-by-instant.

As shown in figure 2, the signal supplied to the reader 7 is a digital square wave signal which is positive (i.e. equal to 1) when a tooth 6 is facing the reader 7 and is null (i.e. equal to 0) when a tooth 6 is not facing the reader 7 (i.e. when the reader 7 is facing the void between two consecutive teeth 6). By using the signal supplied by the reader, the electronic control unit 8 determines the so-called tooth time T, i.e. the interval of time which elapses between the passage of a tooth 6 and the passage of the next tooth 6; by analyzing the tooth times T, the electronic control unit 8 determines the passage of the singularity S as described below.

The electronic control unit 8 identifies the i-th tooth time $T_i$ as the singularity S if and only if at least both of the following equations [1] and [2] are satisfied:

$$[1] \qquad \frac{T_{i-1}}{T_{i-2}} \cong 1$$

$$[2] \qquad \frac{T_i}{T_{i-1}} \cong M$$

$T_i$    tooth time of the i-th tooth 6;
M    number of missing teeth 6 of the singularity S.

Furthermore, according to a preferred embodiment, the electronic control unit 8 identifies the i-th tooth time $T_i$ as the singularity S if and only if the following equation [3] is also satisfied:

$$[3] \qquad \frac{T_i}{T_{i-1}} \cong \frac{1}{M}$$

$T_i$    tooth time of the i-th tooth 6;

M    S. number of missing teeth 6 of the singularity

In the equations [1]-[3], the "approximately ($\approx$)" symbol is used instead of the "equal to (=)" symbol, because, due to inevitable systematic, random measurement errors, the equality is considered satisfied if the difference between the two terms of equality is lower than a programmable threshold value, essentially depending on the reading accuracy.

For example, in the example shown in figure 2, the following equations are satisfied:

$$\frac{T_2}{T_1} \cong 1$$

$$\frac{T_3}{T_2} \cong 3$$

$$\frac{T_4}{T_3} \cong 0.33$$

$$\frac{T_5}{T_4} \cong 1$$

Therefore, in the example shown in figure 2, the tooth time $T_3$ is identified as the singularity S.
In this manner, the recognition of the passage of the singularity S is particularly strong and reliable because it is related to the satisfaction of at least two, and preferably three, equations; accordingly, an incorrect recognition of the passage of the singularity S is extremely difficult, because even following very strong accelerations or decelerations it is extremely difficult for the three equations to be satisfied at the same time beyond the passage of the singularity S.
According to a preferred embodiment, the electronic control unit 8 preliminarily identifies the i-th tooth

time $T_i$ as the singularity S if both equations [1] and [2] are satisfied; thus, the electronic control unit 8 confirms the identification of the i-th tooth time $T_i$ as the singularity S if the equation [3] is also subsequently satisfied, or the electronic control unit 8 cancels the identification of the i-th tooth time $T_i$ as the singularity S if even the equation [3] is then not satisfied. Therefore, the electronic control unit 8 starts the engine control operations considering the i-th tooth time $T_i$ as the singularity S once both equations [1] and [2] have been satisfied, and thus aborts the engine control operations initiated considering the i-th tooth time $T_i$ as the singularity S if even the equation [3] is not then satisfied. No delay is introduced into the identification of the passage of the singularity S by acting in this manner, because the passage of the singularity S is preliminarily identified once the equations [1] and [2] have been satisfied; instead, the strength of the identification algorithm remains intact, because in all cases the equation [3] is also satisfied before definitively identifying the passage of the singularity S.

The above-described control method for determining the angular position of the drive shaft 4 has many advantages, because it is simple and cost-effective to be implemented even in an existing internal combustion engine by requiring neither the addition of new physical components nor the modification of the existing physical components. Furthermore, the above-described control method for determining the angular position of the drive shaft 4 is simple and fast to be run, and thus does not require the presence of a particularly high-performing, electronic control unit 8. Finally, the above-described control method for determining the angular position of the drive shaft 4 allows a sure recognition of the passage of the singularity 6 without introducing any actual delay on such a recognition.

**Claims**

1. A control method for determining the angular position of a drive shaft (4) of an internal combustion engine (1) provided with a phonic wheel (5), which is integral with the drive shaft (4), is provided with a plurality of equally spaced teeth (6), and has a singularity (S) consisting of at least one missing tooth (6) in a predetermined angular position; the control method comprising the steps of:

determining the passage of each tooth (6) of the phonic wheel (5) in front of a reader (7) arranged in a fixed position;
calculating in sequence each tooth time (T), i.e. the interval of time which elapses between the passage of a tooth (6) and the passage of the next tooth (6); and
determining the passage of the singularity (S) according to the tooth times (T);
the control method is **characterized in that** the i-th tooth time ($T_i$) is identified as the singularity (S) if and only if both the following equations [1] and [2] are satisfied:

$$[1] \qquad \frac{T_{i-1}}{T_{i-2}} \cong 1$$

$$[2] \qquad \frac{T_i}{T_{i-1}} \cong M$$

$T_i$ tooth time of the i-th tooth (6);
M number of missing teeth (6) of the singularity (S).

2. A control method according to claim 1, wherein the i-th tooth time ($T_i$) is identified as the singularity (S) if and only if the following equation is also satisfied [3]:

$$[3] \qquad \frac{T_i}{T_{i-1}} \cong \frac{1}{M}$$

$T_i$ tooth time of the i-th tooth (6);
M (S). number of missing teeth (6) of the singularity

3. A control method according to claim 2, and comprising the steps of:

identifying, on a preliminary basi,s the i-th tooth time ($T_i$) as the singularity (S) if both the equations [1] and [2] are satisfied;
confirming the identification of i-th tooth time ($T_i$) as the singularity (S) if even the equation [3] is then satisfied; and
canceling the identification of the i-th tooth time ($T_i$) as the singularity (S) if even the equation [3] is not then satisfied.

4. A control method according to claim 3, and comprising the steps of:

starting the engine control operations by considering the i-th tooth time ($T_i$) as the singularity (S) once both the equations [1] and [2] have been satisfied; and
aborting the engine control operations initiated by considering the i-th tooth time ($T_i$) as the sin-

**EP 2 163 858 A1**

gularity (S) if even the equation [3] is not then satisfied.

FIG.1

FIG.2

EP 2 163 858 A1

Europäisches
Patentamt

European
Patent Office

Office européen
des brevets

## EUROPEAN SEARCH REPORT

Application Number

EP 08 42 5606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 41 33 570 C1 (ROBERT BOSCH GMBH, 7000 STUTTGART, DE) 24 December 1992 (1992-12-24) * column 3, lines 8-13; figures 1,2 * ----- | 1-4 | INV. G01D5/245 |
| X | DE 34 23 664 A1 (BOSCH GMBH ROBERT [DE]) 9 January 1986 (1986-01-09) * abstract; figure 2 * ----- | 1-4 | |
| X | FR 2 860 069 A (SIEMENS VDO AUTOMOTIVE [FR]) 25 March 2005 (2005-03-25) * pages 1-3; figure 1 * ----- | 1-4 | |

|  |  |
|---|---|
|  | TECHNICAL FIELDS SEARCHED (IPC) |
|  | G01D |

The present search report has been drawn up for all claims

| Place of search | Date of completion of the search | Examiner |
|---|---|---|
| Munich | 2 June 2009 | Kallinger, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 42 5606

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2009

| Patent document cited in search report | | Publication date | Patent family member(s) | | Publication date |
|---|---|---|---|---|---|
| DE 4133570 | C1 | 24-12-1992 | AU | 2559092 A | 03-05-1993 |
| | | | WO | 9307449 A1 | 15-04-1993 |
| | | | EP | 0607177 A1 | 27-07-1994 |
| | | | ES | 2089559 T3 | 01-10-1996 |
| | | | JP | 7500164 T | 05-01-1995 |
| | | | US | 5497748 A | 12-03-1996 |
| DE 3423664 | A1 | 09-01-1986 | AU | 571962 B2 | 28-04-1988 |
| | | | AU | 4118185 A | 24-01-1986 |
| | | | BR | 8506792 A | 25-11-1986 |
| | | | WO | 8600415 A1 | 16-01-1986 |
| | | | EP | 0188433 A1 | 30-07-1986 |
| | | | IT | 1184623 B | 28-10-1987 |
| | | | JP | 7065905 B | 19-07-1995 |
| | | | JP | 61502557 T | 06-11-1986 |
| | | | US | 4715009 A | 22-12-1987 |
| FR 2860069 | A | 25-03-2005 | NONE | | |

EPO FORM P0459

For more details about this annex : see Official Journal of the European Patent Office, No. 12/82